Europäisches Patentamt

European Patent Office

Office européen des brevets

(11) Veröffentlichungsnummer: **0 235 580**
B1

(12) **EUROPÄISCHE PATENTSCHRIFT**

(45) Veröffentlichungstag der Patentschrift:
30.08.89

(51) Int. Cl.⁴: **B 23 B 31/20**

(21) Anmeldenummer: **87101285.2**

(22) Anmeldetag: **30.01.87**

(54) Spannvorrichtung für Werkstücke oder Werkzeuge mit einer im Umfang veränderbaren Spannhülse.

(30) Priorität: 04.02.86 DE 3603301

(43) Veröffentlichungstag der Anmeldung:
09.09.87 Patentblatt 87/37

(45) Bekanntmachung des Hinweises auf die Patenterteilung: 30.08.89 Patentblatt 89/35

(84) Benannte Vertragsstaaten:
AT BE CH DE ES FR GB GR IT LI LU NL SE

(56) Entgegenhaltungen:
DE—B— 1 602 749
DE—C— 828 627
US—A— 2 529 218
US—A— 2 610 066
US—A— 2 755 094
US—A— 3 246 903
US—A— 4 025 214

(73) Patentinhaber: Emuge-Werk Richard Glimpel Fabrik für Präzisionswerkzeuge
Nürnberger Strasse 96-100
D-8560 Lauf (DE)

(72) Erfinder: Glimpel, Helmut
Gartenstrasse 6
D-8560 Lauf (DE)
Erfinder: Wenzel, Volker
Keilerstrasse 9
D-8560 Lauf (DE)

(74) Vertreter: Patentanwälte Czowalla . Matschkur + Partner
Dr.-Kurt-Schumacher-Strasse 23 Postfach 9109
D-8500 Nürnberg 11 (DE)

EP 0 235 580 B1

**Beschreibung**

Die Erfindung bezieht sich auf· eine Spannvorrichtung für Werkstücke oder Werkzeuge mit einem mit einer zylindrischen Bohrung versehenen Grundkörper und einer konzentrisch hierzu angeordneten, im Durchmesser veränderbaren zylindrischen Spannhülse, sowie einer axial auf ein Stirnende der auf der gegenüberliegenden Seite axial abgestützten Spannhülse einwirkenden Spannmutter, wobei zumindest das der Spannmutter abgelegene Ende der Spannhülse als mit einem Gegenkegel zusammenwirkende, axial geschlitzte Kegelhülse ausgebildet ist.

Eine derartige bekannte Spannvorrichtung (US-A-3 246 903) weist eine zylindrische Spannzange auf, welche in eine zylindrische Öffnung eines Gehäuses eingeschraubt ist. Die Enden der Spannzange sind als konische Abschnitte ausgebildet, an welchen entsprechend ausgebildete, konische Abschnitte von außen aufgeschobener Hülsen anliegen. Ein mit der zylindrischen Öffnung des Gehäuses konzentrisches Außengewinde am stirnseitigen Gehäuseende steht mit einer kappenförmig aufgesetzten Schraubenmutter in Eingriff.

Daneben sind auch Spannvorrichtungen bekannt (DE-C-16 02 749), bei denen die Veränderbarkeit des Durchmessers der Spannhülse durch Längsnuten erzielt ist. Zudem existieren auch Anordnungen, bei denen axial gegeneinander versetzte innere und äußere Ringeinstichnuten vorgesehen sind (DE-C-828 627). Durch die axiale Zusammenstauchung der Spannhülse mittels der Spannmutter od. dgl. ergibt sich eine Durchmesseränderung gleichzeitig am Innen- und Außendurchmesser, so daß sich die Spannhülse sowohl nach außen in der Bohrung des zylindrischen Grundkörpers, als auch nach innen an der zylindrischen Außenwand des Werkstücks oder Werkzeugs abstützt. Bei einfachen kurzen Spannvorrichtungen können sich dabei Schwierigkeiten mit Rundlaufgenauigkeit des eingespannten Werkzeugs ergeben, da ein direkter Angriff der Spannschraube infolge der Gewindeungenauigkeit zu entsprechenden Verwindungen führen kann. Darüber hinaus ist bei kurzen einfachen Spannvorrichtungen mit Spannhülsen, die axial gegeneinander versetzte Ringeinstichnuten aufweisen, für spezielle Anwendungsfälle die erzielbare Klemmkraft und damit das übertragbare Drehmoment gering.

Der Erfindung liegt daher die Aufgabe zugrunde, eine Spannvorrichtung der eingangs genannten Art so auszugestalten, daß sie unter Beibehaltung eines sehr einfachen Aufbaus und einer geringen Baugröße sowohl hohe Rundlaufgenauigkeit besitzt, als auch zur Übertragung hoher Drehmomente geeignet ist.

Zur Lösung dieser Aufgabe ist erfindungsgemäß vorgesehen, daß das der Spannmutter od. dgl. zugekehrte Ende der Spannhülse als ungeschlitze Kegelhülse ausgebildet ist, der eine als loser Führungsring ausgebildeter, von der Spannmutter beaufschlagte Gegenkegelhülse zugeordnet ist, wobei die Spannhülse axial gegeneinander versetzte innere und äußere Ringeinstichnuten aufweist.

Durch die erfindungsgemäße Kombination einer Spannhülsenspannvorrichtung mit einer Kegelzange unter Verwendung von inneren und äußeren Ringeinstichnuten ergibt sich am inneren Ende der Spannvorrichtung eine erhöhte leichtere radiale Verdrückbarkeit, durch die in besonderem Maße hohe Drehmomente übertragen werden können. Die dem Kegelhülsenende vorgeschaltete Spannhülse mit den Ringeinstichnuten sorgt im Rahmen der erfindungsgemäßen Vorrichtung für eine gegenüber Kegelzangen genauere Ausrichtung des eingespannten Werkzeugs.

Bei der erfindungsgemäßen Vorrichtung ist die Ausbildung so getroffen, daß bei Einleitung der Spannkraft über die Spannmutter od. dgl. zunächst die abgelegene, hintere, durch Schlitzung weichere Kegelhülse schließt. Anschließend wird unter stärkerer axialer Verspannung des Spannhülsenmittelabschnitts eine exakte Ausrichtung des eingespannten Werkzeugs erreicht, die noch zusätzlich durch die vordere ungeschlitzte Kegelhülse verbessert wird.

Zur Vereinfachung des Aufbaus soll der Gegenkegel an einem losen Führungsring ausgebildet sein, was noch den zusätzlichen Vorteil aufweist, daß durch Schlitzung dieses Führungssrings zusätzlich eine erhöhte Aufweitbarkeit nach außen und damit eine erhöhte Verspannbarkeit im zylindrischen Grundkörper erzielt werden kann.

Durch Vorsehen eines Führungsrings zwischen der Spannmutter und der ungeschlitzten Kegelhülse können Ungenauigkeiten des Gewindes, die zu einer entsprechenden Verwerfung der Spannmutter führen, sich nicht auf die gleichmäßige Verspannung der Kegelhülse auswirken, da derartige Toleranzen und Verwerfungen vom Führungsring aus aufgefangen werden.

Weitere Vorteile, Merkmale und Einzelheiten der Erfindung ergeben sich aus der nachfolgenden Beschreibung eines Ausführungsbeispiels sowie anhand der einen Längsschnitt durch eine erfindungsgemäße Spannvorrichtung wiedergebenden Zeichnung.

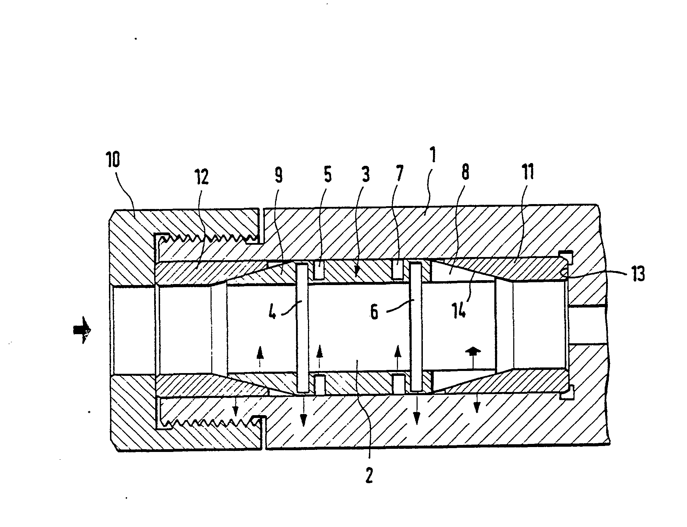

In der Figur erkennt man einen Grundkörper 1 mit einer zylindrischen Innenbohrung 2, in der konzentrisch eine zylindrische Spannhülse 3 mit axial gegeneinander versetzten inneren und äußeren Ringeinstichnuten 4, 5 bzw. 6, 7 angeordnet ist.

Die beiden Ender der Spannhülse 3 sind als Kegelhülsen 8 bzw. 9 ausgebildet, wobei die der Spannmutter 10 abgelegene Kegelhülse 8 geschlitzt ist, während die Kegelhülse 9 bevorzugt ohne Schlitzung ausgeführt ist. Jeder der Kegelhülsen 8, 9 ist eine als loser Führungsring 11 bzw. 12 ausgebildete Gegenkegelhülse zugeordnet, wobei diese sowohl geschlitzt als auch ungeschlitzt ausgeführt sein können. Der Führungsring 11 stützt sich an einer Schulter 13 des Grundkörpers ab.

Bei der Einleitung der Spannkraft über die Spannschraube 10 sorgt der Führungsring 12 dafür, daß Gewindeungenauigkeiten und daraus resultierende Verwerfungen der Spannschraube sich nicht auf die Spannhülse bzw. deren Kegelhülsen 8, 9 auswirken können.

## Patentansprüche

1. Spannvorrichtung für Werkstücke oder Werkzeuge mit einem mit einer zylindrischen Bohrung (2) versehenen Grundkörper (1) und einer konzentrisch hierzu angeordneten, im Durchmesser veränderbaren zylindrischen Spannhülse (3) sowie mit einer axial auf ein Stirnende der auf der gegenüberliegenden Seite axial abgestützten Spannhülse (3) einwirkenden Spannmutter (10), wobei zumindest das der Spannmutter (10) abgelegene Ende der Spannhülse (3) als mit einem Gegenkegel (14) zusammenwirkende, axial geschlitzte Kegelhülse (8) ausgebildet ist, dadurch gekennzeichnet, daß das der Spannmutter (10) zugekehrte Ende der Spannhülse (3) als ungeschlitzte Kegelhülse (9) ausgebildet ist, der eine als loser Führungsring (12) ausgebildete, von der Spannmutter (10) beaufschlagte Gegenkegelhülse zugeordnet ist, wobei die Spannhülse axial gegeneinander versetzte innere und äußere Ringeinstichnuten (4 bis 7) aufweist.

2. Spannvorrichtung nach Anspruch 1, dadurch gekennzeichnet, daß der Gegenkegel (14) an einem losen Führungsring (11) ausgebildet ist.

3. Spannvorrichtung nach Anspruch 1 oder 2, dadurch gekennzeichnet, daß die Führungsringe (11, 12) geschlitzt sind.

## Claims

1. A gripping device for workpieces or tools, having a basic body (1) provided with a cylindrical bore (2) and a cylindrical clamping sleeve (3) which is arranged concentrically therewith and is variable in diameter, and having a tightening nut (10) acting axially on one end of the clamping sleeve (3) which is axially supported at the opposite side, at least the end of the clamping sleeve (3) remote from the tightening nut (10) being constructed in the form of an axially split taper sleeve (8) cooperating with a counter taper (14), characterised in that the end of the clamping sleeve (3) facing the tightening nut (10) is constructed in the form of an unsplit taper sleeve (9) with which there is associated a counter taper sleeve constructed in the form of a loose guide ring (12) and acted upon by the tightening nut (10), while the clamping sleeve comprises inner and outer annular turned grooves (4 to 7) which are offset axially in relation to one another.

2. A gripping device according to Claim 1, characterised in that the counter taper (14) is formed on a loose guide ring (11).

3. A gripping device according to Claim 1 or 2, characterised in that the guide rings (11, 12) are split.

## Revendications

1. Dispositif de serrage pour pièces ou outils comprenant un corps de base (1), comportant un alésage cylindrique (2), une douille de serrage (3) à diamètre variable disposée concentriquement par rapport audit corps (1) ainsi qu'un écrou de serrage (10) agissant axialement sur une extrémité frontale de la douille (3) de serrage appuyée axialement sur le côté opposé, au moins l'extrémité de la douille de serrage (3) opposée à l'écrou de serrage (10) présentant une structure de douille conique (8) fendue axialement, coopérant avec un contre-cône (14), caractérisé en ce que l'extrémité de la douille de serrage (3) tournée vers l'écrou de serrage (10) présente une structure de douille conique (9) non fendue, sur laquelle s'appuie une douille en contre-cône en forme d'anneau de guidage libre (12), sur laquelle agit l'écrou de serrage (10), la douille de serrage présentant des rainures annulaires pénétrantes (4 à 7) intérieures et extérieures décalées axialement les unes par rapport aux autres.

2. Dispositif de serrage selon la revendication 1, caractérisé en ce que le contre-cône (14) est formé sur un anneau de guidage libre (11).

3. Dispositif de serrage selon la revendication 1 ou 2, caractérisé en ce que les anneaux de guidage (11, 12) sont fendus.